# EUROPEAN PATENT APPLICATION

(11) **EP 2 077 357 A1**
(43) Date of publication of application: **08.07.2009**
(21) Application number: 08000123.3
(22) Date of filing: 04.01.2008
(51) Int. Cl.: E04C 2/292, E04C 2/34, F16F 7/12

(54) **Structural member and method of manufacturing the same**

(71) Applicant: Lösch, Siegfried, 8700 Leoben (AT)
(72) Inventor: Lösch, Siegfried, 8700 Leoben (AT)
(74) Representative: Haeusler, Rüdiger Hans-Jörg

(57) **Abstract**

A structural member for lightweight construction, the structural member comprising a plurality of anisotropically designed hollow bodies, wherein the plurality of anisotropically designed hollow bodies are arranged to abut to one another along all three spatial directions, and wherein adjacent ones of the plurality of anisotropically designed hollow bodies are fixed to one another.

## Description

The invention relates to a structural member.

Moreover, the invention relates to a method of manufacturing a structural member.

Successful lightweight design requires consideration of design, production engineering and materials technology. The aim of achieving optimal material usage, desired physical properties and minimum weight is as important as high efficiency and low environmental impact.

An approach in lightweight design is the manufacture of structural members on the basis of hollow spheres.

DE 199 39 513 discloses a composite panel which consists of two outer metal or plastic boards as covering and base plate joined to an intermediate layer which is variably composed of hollow balls welded or sintered or stuck together. The diameter of the balls can be the same or variable in the same or different arrangements.

Other references related to structural members on the basis of hollow spheres are DE 103 40 383, DE 102 57 962, DE 40 43 349.

DE 10 2005 005 107 discloses a deformation element for the front area of a motor vehicle which comprises cylindrical bodies and/or balls that are disposed in an approximately perpendicular relation to the direction of impact and, at least in the area of impact, behind a flexible shell. The cylindrical bodies/balls are disposed and configured to give way under the effect of a local impact in a substantially nondestructive manner, thereby deforming the shell. If the impact is a large-area impact, the cylindrical bodies/balls can give way only to a small degree or are destroyed if the impact is sufficiently high. The deformation element is preferably used as pedestrian protection structure.

A shortcoming of conventional structural members on the basis of hollow bodies is that an adjustment of desired mechanical properties of such a structural member may be difficult.

It is an object of the invention to provide a structural member allowing for an accurate adjustment of desired mechanical properties.
In order to achieve the object defined above, a structural member and a method of manufacturing a structural member according to the independent claims are provided.

According to an exemplary embodiment of the invention, a structural member for lightweight construction is provided, the structural member comprising a plurality of anisotropically designed hollow bodies, wherein the plurality of anisotropically designed hollow bodies are arranged to abut to one another along all three spatial directions, and wherein adjacent ones of the plurality of anisotropically designed hollow bodies are fixed to one another.

According to another exemplary embodiment of the invention, a method of manufacturing a structural member for lightweight construction is provided, the method comprising arranging a plurality of anisotropically designed hollow bodies to abut to one another along all three spatial directions, and fixing adjacent ones of the plurality of anisotropically designed hollow bodies to one another.

The term "anisotropically designed hollow bodies" may particularly denote that at least one property of the hollow bodies differs in different spatial directions, particularly differs among different coordinate axes. For example, the different coordinate axes may be perpendicular to each other. Such a property may be a geometrical property such as a dimension, a distance from a center of gravity, a wall thickness, etc. Particularly, a non-spherically symmetric body may be an example for an anisotropically designed hollow body. The term "anisotropically designed hollow bodies" may therefore particularly denote that the hollow bodies do not have a spherical symmetry and may have an intrinsic preferential direction.

The term "the plurality of anisotropically designed hollow bodies are arranged to abut to one another along all three spatial directions" may particularly denote that in each of three spatial directions forming a coordinate system, a sequence of at least two hollow bodies are arranged and are strung together with a fixed mechanical connection between adjacent ones of the hollow bodies. A connection trajectory of different abutment points (such as welding spots) may be aligned linearly, for instance along any one of the coordinate axes. However, such a connection trajectory of different abutment points may also be curved (statistically or according to given a design rule or formula).

According to an exemplary embodiment of the invention, a structural member is provided which can be manufactured in lightweight construction and which has, particularly along three Cartesian coordinate axes, an arrangement of anisotropic hollow basic units which together form a structural member which may have anisotropic physical properties and a high mechanical stability. By taking this measure, an ordered structure may be designed which allows for a reproducible engineering to obtain a member which fulfills predefined mechanical requirements. By providing a three-dimensionally extending sequence of anisotropic building blocks, a volumetric member with defined mechanical properties may be constructed according to a desired function of the structural member. Due account may be taken on operational demands of the structural member which differ in different directions, and which can be reflected by the asymmetry of the basic building blocks.

In the following, further exemplary embodiments of the structural member will be explained. However, these embodiments also apply to the method.

The plurality of anisotropically designed hollow bodies may be arranged to abut to one another along three spatial directions. In particular, they may be arranged to abut to one another along three perpendicular spatial directions. Therefore, the anisotropically designed hollow bodies may be arranged with a sequence of hollow bodies along an x-axis, a sequence of hollow bodies along a y-axis, and a sequence of hollow bodies along a z-axis. Thus, in all three dimensions of space, an ordered arrangement of the basic building blocks may be provided allowing for a highly ordered structure with properties which may differ along each of the spatial directions. Corresponding dimensions of the asymmetric basic units may (or may not) be aligned along an assigned one of the normal axes.

The plurality of anisotropically designed hollow bodies may be arranged to form a periodic structure (or a symmetric structure) along one, two or all three of the spatial directions. Such a periodic structure may include a motif or a basic arrangement of one or more of the hollow bodies which is repeated multiple times along the corresponding spatial direction. Thus, an arrangement (xₙ)ₘ can be obtained in which x is a basic building block, xₙ is a basic arrangement of n basic building blocks, and the basic arrangement is repeated m times. Other periodic mapping rules are possible.

Alternatively, the plurality of anisotropically designed hollow bodies may be arranged to form an aperiodic structure or an asymmetric structure along one, two or all three of the spatial directions. On the basis of the anisotropic basic building blocks, any non-symmetrical structure may be formed. Such a formation may follow a specific design rule or may be simply stochastically, statistically, unordered, or arbitrary. Thus, either an adjustment of desired properties is possible, or the generation of a mechanically stable member having an intentionally unordered arrangement of anisotropic building blocks.

The plurality of anisotropically designed hollow bodies may be arranged to have anisotropic mechanical properties along one, two or all three of the spatial directions. Such anisotropic mechanical properties may be a bending strength, a modulus of elasticity, a compressibility, a torsion response, etc. By the design of anisotropic mechanical properties of the structural member in different spatial directions, requirements of the structural member during use may be considered, particularly different loads acting from different directions on the structural member.

Each of the plurality of anisotropically designed hollow bodies may be made of one or more materials, for instance may comprise a metallic material such as steel, aluminium, titan, magnesium or a combination or alloy thereof, may comprise a ceramic material and/or may comprise a plastic material. Therefore, by selecting a corresponding material, the requirements of a specific application may be taken into account. It is also possible to implement biological materials (such as a bone material, etc.) as walls of the hollow structures.

The structural member may additionally comprise a plurality of isotropically designed hollow bodies, wherein adjacent ones of the plurality of anisotropically designed hollow bodies and of the plurality of isotropically designed hollow bodies may be fixed to one another. By a combination or mixture of isotropic basic building blocks and anisotropic basic building blocks, a particularly robust mechanical structure may be obtained. For example, one portion of the structural member may be made of isotropically designed hollow bodies, another part of the structural member may be made of anisotropically hollow bodies. It is also possible to mix isotropic bodies and anisotropic bodies within a specific portion of the structural member.

The plurality of anisotropically designed hollow bodies may be arranged to abut to one another to form an ordered structure having defined physical properties along all three spatial directions. Therefore, when a requirement regarding the mechanical load characteristics of a structural member is defined, the dimensions, wall thicknesses, geometry and arrangement of the anisotropically designed hollow bodies may be configured to specifically realize the physical properties desired for the specific application. This may include an adjustment of the mechanical properties, the geometric dimensions, the surface properties, and the texture of the structural member. Apart from the mechanical robustness, it is also possible to arrange the anisotropically designed building blocks in a manner so that the entirety of the building blocks at the surface of the structural member are in accordance with conditions regarding required surface properties, particularly provide a specific surface geometry. For example, a tooth wheel or any other complex geometrical or technical structure may be designed using anisotropically designed hollow bodies which, due their anisotropic geometric properties, allow to be designed and arranged properly to form basically any desired surface trajectory or shape.

The plurality of anisotropically designed hollow bodies may be identical basic building blocks of the structural member. Therefore, only a single basic building block may be sufficient to construct ,in a modular manner, essentially any desired structural member. This may be particularly obtained by using ellipsoids or prisms as the basic building blocks.

Dimensions of the plurality of anisotropically designed hollow bodies may differ along the three spatial directions. For example, an ellipsoid may be designed with two or three different semi-axes. Corresponding spatial dimensions of the basic building blocks may be arranged along a corresponding one of the spatial directions. For example, all ellipsoids may be arranged so that a first semi-axis extends along a first direction, so that a second semi-axis extends along a second direction, and so that a third semi-axis extends along a third direction. In this manner, highly ordered structures with anisotropic physical properties may be designed.

The plurality of anisotropically designed hollow bodies may be arranged so that a packing density of different portions of the structural member differs. In order to selectively mechanically weaken or strengthen specific portions of a structural body, it is possible to locally increase or decrease a packing density of the basic building blocks. By taking this measure it is possible to define, with simple measures, sophisticate or complex structures constituted by different portions having spatially varying mechanical properties.

The plurality of anisotropically designed hollow bodies may be arranged to define at least one preferential direction. A physical property along such a preferential direction may differ from the physical property along other directions. For instance, such a physical property may be a local or global maximum or minimum along the preferential direction.

A wall thickness of the plurality of anisotropically designed hollow bodies may be constant or identical. Therefore, a single basic building block may be sufficient to construct even complex structural members.

Alternatively, a wall thickness may differ among different ones of the plurality of anisotropically designed hollow bodies or may differ among different portions of one of the plurality of anisotropically designed hollow bodies. By providing anisotropically designed hollow bodies having different wall thicknesses, a further design parameter may be added to spatially vary or modulate the mechanical properties of the structural member. Apart from varying a wall thickness among different ones of the anisotropically designed hollow bodies, it is also possible that a particular hollow body has different wall thicknesses at different surface sections. Also this increases the flexibility of designing or engineering specific physical properties.

A part of the anisotropically designed hollow bodies may define an outer boundary of the structural member. Therefore, it may be dispensable to provide a dedicated outer casing or housing within which the arrangement of the hollow bodies are accommodated. Particularly due to the anisotropic geometry of the hollow bodies they can be designed to form an essentially smooth outer surface with a sufficient mechanical strength to provide stability even in the absence of a surrounding enclosure. This may allow to manufacture the structural member with low costs, high mechanical stability and low weight. Due to the anisotropy of the basic units, the basic units may have different curvatures at their surface so that a basic unit may contribute to a desired surface curvature of a designed structural member by rotating the building block to expose a desired curved section at the surface of the structural member.

Adjacent ones of the plurality of anisotropically designed hollow bodies may be fixed to one another by sintering, adhering, welding, soldering, screwing, pressing and/or riveting. Other connection techniques are possible. One possibility is sintering which connects the adjacent structural members by heating them to a temperature at which their surface becomes partially liquid, and by subsequently cooling the structural member so that the connection portions harden and the connection is stable. Alternatively, an adhesive may be added to a non-connected arrangement of basic building blocks so as to provide an adhering connection between adjacent ones of the hollow bodies. Also the application of pressure at a high temperature can promote the connection.

The plurality of anisotropically designed hollow bodies may be hollow ellipsoids, hollow cuboids, hollow rectangular parallel epipeds, hollow cylinders and/or hollow prisms.

Particularly, ellipsoids may have two or three different semi-axes (for instance one or two major semi-axes and one or two minor semi-axes, or three different semi-axes) which can be adjusted to design the structural member. An ellipsoid may be obtained by rotating an ellipse about one of the axes. An ellipsoid may be a type of quadratic surface that is a higher dimensional analogue of an ellipse. Examples are an oblate spheroid (disk-shaped), a prolate spheroid (cigar-shaped), or a scalene ellipsoid ("three unequal sides"). Different kinds of ellipsoids and/or other building blocks may be combined to form structural members.

Prisms may be structures formed by a planar base area having any desired shape and an extension in a third dimension with a certain angle to the base area, for instance 90°. An n-sided prism may be a polyhedron made of an n-sided polygonal base, a translated copy, and n faces joining corresponding sides. Thus, these joining faces may be parallelograms. All cross-sections parallel to the base faces may be the same. A right prism is a prism in which the joining edges and faces are perpendicular to the base faces. A parallelepiped is a prism of which the base is a parallelogram, or equivalently a polyhedron with 6 faces which are all parallelograms. Different kinds of prisms and/or other building blocks may be combined to form structural members.

A cuboid may have three rectangularly arranged axes perpendicular to one another, wherein two or three of the axes of the cuboid may have different lengths or may have identical lengths (the latter case refers to a cube).

The hollow bodies may also comprise tetrahedrons, octahedrons, dodecahedrons, etc.

At least a part of the plurality of anisotropically designed hollow bodies may have an open surface portion exposing a hollow interior. By forming a recess or a hole in a surface of the anisotropically designed hollow bodies, it may be possible to strengthen the anisotropic properties by selectively removing a surface or area by opening it.

Alternatively, at least a part of the plurality of anisotropically designed hollow bodies may have a closed surface enclosing a hollow interior. By taking this measure, a specifically robust structure allowing to receive a high mechanical load may be provided.

The plurality of anisotropically designed hollow bodies may be arranged in such a manner as to obtain an essentially smooth boundary at a surface of the structural member. By anisotropic basic building blocks, it is possible to provide building blocks with a small volume but having large dimensions and therefore a small curvature along a specific dimension. This property, particularly in combination with other dimensions in which the curvature is large, allow to map essentially each boundary surface even of complex technical members such as a tooth wheel, so as to make the boundary smooth.

The plurality of anisotropically designed hollow bodies may be arranged in such a manner as to obtain a curved boundary at a surface of the structural member. Therefore, without the need of a curved casing, the anisotropic curvature of the basic building blocks may allow to construct even curved surfaces. Omitting a separate casing may further allow to reduce weight and to safe material.

The plurality of anisotropically designed hollow bodies may have a dimension in each of the three spatial directions between about 0.5 mm and about 30 mm, particularly between about 2 mm and about 20 mm, more particularly between about 3 mm and about 11 mm, for instance of about 5 mm. With such dimensions, many structural members required in different technical fields may be constructed and required mechanical loads of many applications can be achieved.

The wall thickness of the anisotropically designed hollow bodies may be smaller than their spatial extensions, particularly may be less than 0.5 mm, particularly may be less than 0.2 mm, more particularly may be less than 0.1 mm. A ratio between an extension of the structural member and a corresponding thickness may be larger than 3, particularly larger than 5, more particularly larger than 10.

Structural members according to exemplary embodiments of the invention may be applied in various technical fields. For example, it may be used as a crash absorber (for instance a bumper, a side-collision protection, a crash test dummy), a structural member for an aircraft or for a spacecraft (for instance a stringer), a structural member for a vehicle or a part thereof (for instance an engine, a car body, a racing car), a sports equipment (for instance a ski stick, a club, a golf club, a tennis racket, a squash racket, a hiking pole), a machine part (for instance a plant engineering member, a structural member for robotics, a structural member for a jet engine, a framework for a bicycle), or a structural member for a medical device (for instance an implant such as a femur nail).

Therefore, ordered structures may be constructed using cellular materials in which textures may be defined. Particularly when implementing prism-shaped hollow bodies, no separate connection elements such as connection necks are required between adjacent hollow bodies, since the abutting surfaces of the prism-shaped hollow bodies may provide themselves for stable connection. Thus, necks between adjacent spheres which conventionally are mechanical weak points may be eliminated by the anisotropic geometry of the basic building blocks allowing for a small or no curvature in connection sections and therefore allowing to eliminate the need of necks between adjacent basic building blocks.

By providing an ordered structure constituted by anisotropic basic units, predictable physical properties of the manufactured structural member may be ensured. Using anisotropically shaped building blocks such as ellipsoids may allow for a closer packing density and the definition of pre-defined directions or textures, along one of more of the main axes. Thus, embodiments of the invention further develop members of cellular materials in such a manner that a calculation of deformations and stresses under load (particularly tractive force, compressive force, bending force, shear force, torsion force, displacements of any kind, etc.) becomes possible. Properties such as a light weight of the structural member, a proper energy absorption, an adjustable stiffness and a proper damping can be selectively controlled.

Particularly, a technical member of a cellular material may be provided which is constructed in such a manner that the volume of the member results in a defined geometrical and physical arrangement of basic cells which are reproducible regarding their technical manufacturability to have identical technical and physical properties, and are technically reliable regarding their mechanical and functional behavior.

The basic cell of the cellular material may be a hollow body with the geometry of an ellipsoid. The base cell of the cellular material may also have a prism shape and may opened at one or more sides. It is possible that the hollow body is made of a metallic or ceramic material or comprises plastic materials. The hollow body may be arranged in a manner that a physically predefined direction within a partial volume results. A defined variation of all geometrical, physical and material science related parameters may be adjusted in such a manner that identical (constant and/or isotropic) structure properties are definable in specific portions. The cellular member may be surrounded by metallic or ceramic cladding or covering which may be in a positive locking or non-positive locking contact with the cell construction, wherein such a contact can be provided by a technical connection technique such as welding, soldering, adhering, sintering, screwing, riveting, etc. The connection of the hollow bodies among each other and/or the connection with another member which they contact can be realized by adhering, soldering, welding or sintering.

A prismatic cell may be opened or closed. The prismatic cell may be provided with planar and/or curved surfaces. The arrangement of the basic cells relative to one another can be in accordance with a geometrically and technically reproducible ordering scheme. The hollow bodies may be classified regarding their size or other properties before constructing the entire structure, wherein a control of the hollow bodies regarding shell thickness and, if desired, regarding material composition may be carried out. The structure may be manufactured based on powder metallurgic materials and/or ceramic powders. In the context of a powder metallurgic manufacture, the material may be pre-compressed. It is also possible that casting and/or die casting procedures are applied. The cell walls may be pressed during manufacture. It is also possible to close an opened manufactured cell by adhering, soldering, welding, etc. a cell wall to the open structure to thereby manufacture a closed prismatic cell. By stringing together prismatic open and/or closed cells by directly connecting neighbored cell walls, a device may be manufactured which is highly stable.

For a specific application having specific load requirements, particularly one or more of the following design criteria may be considered for manufacturing a structural component according to an exemplary embodiment of the invention:
- Selection of the material of the hollow bodies
- Selection of the material of a cladding structure of the hollow body
- Selection of the connection technology of the hollow bodies (adhering, soldering, welding, sintering)
- Selection of a material gradient (for instance neighbored hollow bodies may be made of different materials)
- Selection of hollow body dimensions
- Selection of the wall thickness (cell wall thickness)
- Selection of the dimensions of an optional cladding
- Selection of the positions of the hollow bodies with respect to one another
- Selection of geometrical gradients (neighbored hollow bodies may differ in size)
- Selection of a gradient of a shell thickness (neighbored hollow bodies may have a wall thickness which is larger or smaller).

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Fig. 1 schematically illustrates a structural member according to an exemplary embodiment of the invention.
Fig. 2 illustrates a hollow sphere connection.
Fig. 3 illustrates a porous shell.
Fig. 4 illustrates an elliptical basic building block for a structural member according to an exemplary embodiment of the invention.
Fig. 5 illustrates the formation of preferential directions of a structural member according to an exemplary embodiment of the invention.
Fig. 6 illustrates a variation of a gradient using basic building blocks of a structural member according to an exemplary embodiment of the invention.
Fig. 7 illustrates an open cube of a structural member according to an exemplary embodiment of the invention.
Fig. 8 and Fig. 9 illustrate an assembly of prismatic cells of a structural member according to an exemplary embodiment of the invention.
Fig. 10 and Fig. 11 show an assembly of a structural member according to an exemplary embodiment of the invention.
Fig. 12 shows a structural member according to an exemplary embodiment of the invention in which properties of prismatic cells are varied towards a boundary of the structural member.
Fig. 13 and Fig. 14 illustrate a device for manufacturing a structural member according to an exemplary embodiment of the invention.

The illustration in the drawing is schematically. In different drawings, similar or identical elements are provided with the same reference signs.

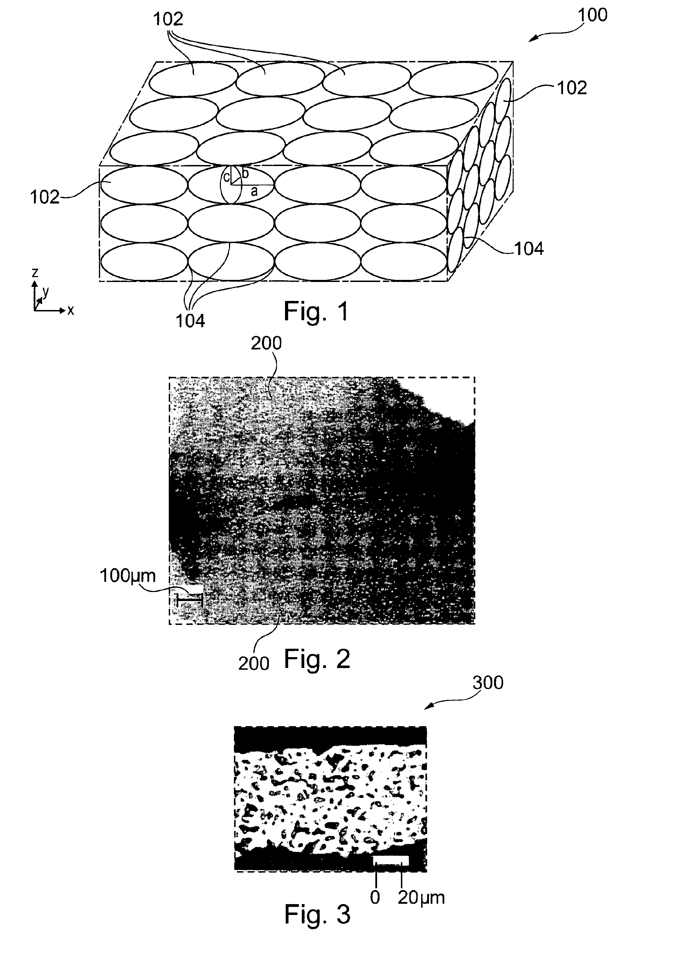

In the following, referring to **Fig. 1****,** a structural member 100 according to an exemplary embodiment of the invention will be explained.

The structural member 100 is composed of a plurality of geometrically anisotropic hollow bodies 102 to thereby provide a lightweight construction member resulting from the hollow provision of the basic units. The anisotropically designed hollow bodies 102 are arranged to abut to one another along three orthogonal spatial directions x, y, z which are Cartesian coordinates and therefore provide three axes which are perpendicular to one another. In each of the three directions x, y, z, adjacent ones of the anisotropically designed hollow bodies 102 are fixedly connected to one another at sintering connection portions 104. Therefore, along the x-axis, a linear arrangement of contacted and rigidly connected hollow bodies 102 are provided, as well as along the y-axis and along the z-axis.

Along each of the axes x, y, z, the identical hollow bodies 102 form a periodic one-dimensional arrangement. The hollow bodies 102 are made of steel or aluminum material and define an ordered structure having defined physical properties along all three spatial directions x, y, z. As can be taken from Fig. 1, each of the ellipsoids 102 has a semi-axis of a dimension "a" in x-direction, a semi-axis of a dimension "b" in y-direction, and a semi-axis of a dimension "c" in a z-direction. Consequently, since the values a, b and c are different (in the present embodiment a>b=c), the mechanical properties of the structural member 100 along the x-axis are different from the mechanical properties of the structural member 100 along the y-axis and the z-axis.

The hollow bodies 102 each have an entirely closed surface enclosing a hollow interior. They provide for a mechanically robust structure at a light weight. In the present embodiment, a=4 mm, b=c=2 mm.

The structural member 100 may be configured as a crash absorber having different crash absorbing properties along the x-axis as compared to the y-axis and the z-axis.

Embodiments of the invention relate to members which are constructed from ordered cellular materials. These can be constructed based on a base cell or a unit cell by arranging cells and connecting them to form a composite structure. In this context, the respective cells have a defined geometrical shape and can be provided as closed hollow bodies (for instance hollow ellipsoids and hollow spheres), and can also be formed as opened hollow bodies (for instance prismatic cells having one or more open side faces).

The connection of the individual base cells to one another can be performed in such a manner that a correspondingly ordered and mutual structure is generated. The geometrical arrangement of the cells in a structural member allows for a technical predictability of the behavior of the structural member as well as a corresponding reproducibility of members which may be identical in a technical sense within defined tolerances.

In contrast to conventional structures, the structural member according to an exemplary embodiment of the invention may be predictable regarding specific behavior and function in different environments. Instead of a random distribution of individual structural members, embodiments of the invention provide a defined ordered structure having a specific symmetry rule. Also cell dimension and cell thickness may be adjusted according to an exemplary embodiment of the invention.

Members can be designed in technical procedures so that they have reproducible properties. Such properties are physical, particularly mechanical properties, qualitative properties (for instance geometric dimensions and surface properties) and/or functional properties (behavior in connection with neighbored structural members). In order to guarantee this, members may be constructed according to technical rules within an engineering design procedure in such a manner that they can be examined regarding a specific function in a defined time duration under specific loads in a defined environment. In this context, it is possible that nominal data are compared to characteristic values (by calculations and/or simulations).

In contrast to conventional systems, a structural member according to an exemplary embodiment of the invention does not necessarily have to be surrounded by a cladding structure or a casing. A mechanical weak point of conventional structures (for instance a sinter neck, adhering neck or solder neck) may be improved or eliminated according to exemplary embodiments of the invention, since the asymmetric arrangement of the basic building blocks allows for a direct connection of adjacent surface portions having a sufficiently large contact area with one another.

**Fig. 2** illustrates a conventional connection of two hollow spheres 200, 202. Due to the manufacturing process of hollow spheres 200, 202, sphere shells may provided which are porous and which comprise impurities in the form of remnants from the manufacturing process (for instance carbon). However, such remnants in the sphere shell may form undesired bonds or compounds which may deteriorate the properties and the quality of the hollow spheres.

**Fig. 3** shows a porous shell 300 of a conventional hollow sphere. The porous property may deteriorate the properties of the structural member.

Based on these and other recognitions of the present inventor, exemplary applications of the invention have been developed.

According to an exemplary embodiment of the invention, a base cell 400 for a structural member (for instance the structural member 100) is provided which has the shape of an ellipsoid, wherein at least two of the three axes of the ellipsoid (a, b, c) deviate from one another regarding their dimensions.

A structure which can be constructed by connecting these ellipsoid based cells 400 can be packed closer than a comparable structure of hollow spheres. This can be employed technically in order to increase or vary the degree of the package density within a predefined order in such a manner that in specific zones of the volumes filled with the cells dedicated properties can be set.

A further property of a structural member formed from ellipsoids 400 is that with the three semi-axes a, b, c, a larger number of parameters for adjusting desired properties are available as compared to a hollow sphere. These dimensions are the semi-axes a, b, c, the shell thickness s and the material or materials of the shell.

By forming the base cell shaped as an ellipsoid, it may also be possible to form so-called textures. That is, it is possible to define preferential directions in the structure for defined properties, for example the module of elasticity, the stiffness or a specific deformation behavior. In this manner, it may be possible to construct an energy absorber which has a specifically defined behavior regarding position, velocity and/or acceleration, for instance upon collision with another body.

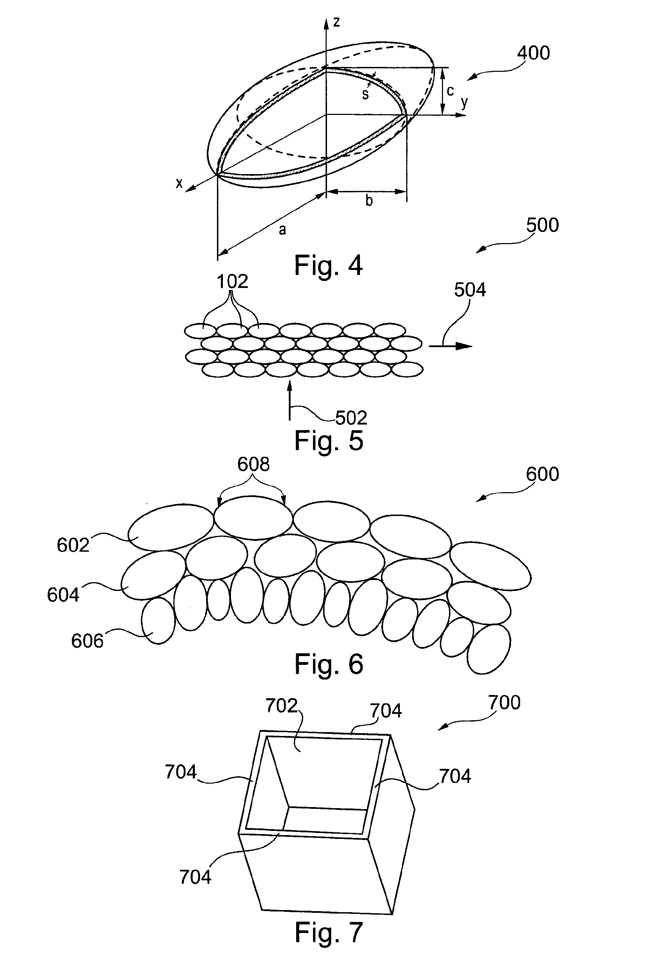

**Fig. 5** illustrates a structural member 500 according to an exemplary embodiment of the invention, in which a number of ellipsoids 102 are shown which are connected along two preferential directions denoted with reference numerals 502 and 504.

The above-described properties of embodiments of the invention regarding the dedicated adjustment of parameters for defining specific physical and mechanical properties can also be denoted as a micro-design. Such a micro-design cannot only be applied to the entire volume of a structure or of a structural member but can also be applied to a partial volume or can be varied in a continuous manner (for instance according to a desired gradient) in such a manner that it is possible to arrange ellipsoids in a boundary region of the structure in another manner as in a core, or to modify the shell thickness from one ellipsoid to the next one.

**Fig. 6** shows a structural component 600 according to another exemplary embodiment of the invention comprising different kind of ellipsoids 602, 604, 606 which do not only differ regarding their semi-axes and their shell thicknesses, but also regarding their orientation. By implementing the ellipsoid 602 having one semi-axis which is significantly larger than the other semi-axes, it is possible to provide a smooth curved external surface 608 which can be designed to follow a desired structure of a technical member.

According to an exemplary embodiment of the invention, prismatic (or cube-shaped) cells may be provided which can be open at specific sides. Such a cube-like basic building block 700 is shown in **Fig. 7** in which an open side 702 is shown which is surrounded by closed sides 704. Such an opening 702 may be obtained as a result of the manufacture of the cells. In such a context, powder may be used for metallic and ceramic cells and may be inserted into a press or any other technical device under pressure so as to thereby form an open thin walled cube or any other similar prismatic geometry, wherein compression is possible during the manufacture procedure.

With such a procedure, it is possible to adjust the cell wall thickness even within one and the same cell in a stepless manner. By compressing powder during manufacture it is made possible to use larger material thicknesses as compared to conventional hollow structures, without the danger of an undesired formation of pores. By aligning such cells in a three-dimensional manner, any desired structures may be constructed.

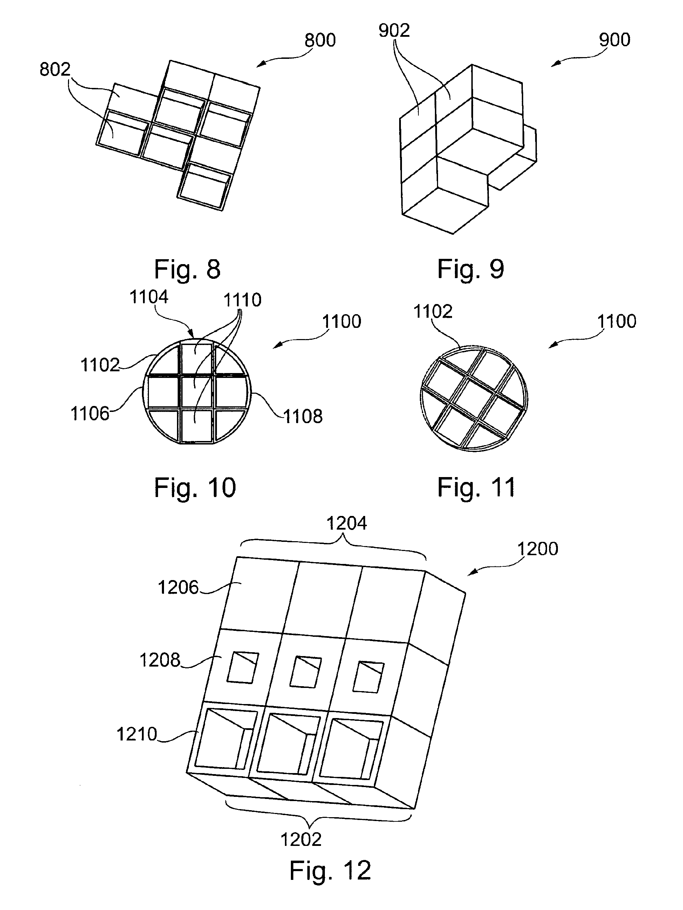

A corresponding embodiment is shown in **Fig. 8** showing a structural member 800 composed of several prismatic cells 802 which may be connected along their entire wall surface to strengthen or improve a connection.

**Fig. 9** shows a three-dimensional image 900 formed by prismatic cells 902 each of which being connected to adjacent cells 902 along the respective entire planar surface of the rectangular sides of the prisms 902.

A manufacture of different basic building blocks having standard sizes allows for the provision of a construction set which is based on a modular arrangement of one or more standard cells.

The manufacture of the surface of the member can be integrated directly in this modular system, thereby preventing a connection of a cladding as component surface with the cell structure which involves high effort.

The design of the outer cells, i.e. cells contributing to the boundary of the structural member, may be performed in different manners. According to a first embodiment, a cylinder segment may be aligned to a base cell in order to generate a curvature. According to a second embodiment, the curvature may be integrated in a cell wall, wherein the hollow space may be the same as with a basic cell. According to a third exemplary embodiment, a cell wall may be completely curved. Furthermore, the outer shape of a structural member may be designed by any other combination of the described embodiments.

**Fig. 10** and **Fig. 11** show an embodiment of a corresponding structural component 1100 according to an exemplary embodiment having a curved outer surface 1102.

A first portion 1104 relates to the first embodiment. A second portion 1106 relates to the second embodiment. A third portion 1108 relates to the third embodiment. Basic cells are denoted with reference numeral 1110.

In the case of a structure component being very large as compared to a base cell, it is possible to use a full cube as an outer cell. In such a scenario, a stepped surface may then be generated as a surface of the structural member which can be smoothed by a subsequent processing (for instance grinding).

**Fig. 12** shows a structural component 1200 according to an exemplary embodiment in which an inner side 1202 of the structural component is shown as well as an outer side 1204 of the structural component 1200.

First basic cells 1206 are formed as solid cubes, intermediate basic building units 1208 are formed as hollow cubes having a thick wall and third components 1210 are formed as hollow cubes having a small outer wall.

An embodiment as the one shown in Fig. 12 allows for a simple applicability of standardized connecting technologies such as holes and bores for detachable and non-detachable connections such as screws and rivets, welding, etc.

The cell dimension, the wall thickness of the cell and the basic material can be optimized in a preceding technically design procedure in such a manner that a member with optimized properties results. For example, the previously mentioned parameters may be varied in such a manner that tensile stresses in the structural member are as small as possible, that stress gradients remain small, that deformations assume specific desired values or that the behavior of the structural member can be optimized or adjusted under loads acting dynamically over time.

The design of the surface of the structural component may be provided by prismatic basic cells. For example, such cells may be provided as solid bodies or with an increased wall thickness in order to generate a tight surface for receiving contact forces.

A combination with other structural components (for instance a pipe surrounding a hollow body structure as a surface) may therefore be dispensable. However, such a surrounding component may nevertheless be present according to other exemplary embodiments. By omitting such a surrounding element, the effort may be reduced, the costs and the processing time may be reduced. It is further possible to design connection elements (such as screw connections) in a simple way.

Embodiments of the invention provide a further development of parts with cellular material in such a manner that the calculation of deformations and/or stresses to be expected can be performed at each shape of load, for instance traction force, press force, bending force, torsion force, etc., wherein properties such as a sufficiently high density of the wall, a proper energy absorption and a proper damping can be achieved so that an uncontrolled failure of the structural component may be prevented. Such members can be employed as structural members for the transmission of structural loads, wherein an optionally attached mantle can be provided without a significant contribution to the supporting function of the system, but for design reasons, optical functions or further functions (for instance preventing of impurities).

The connection of the hollow bodies among each other and/or the connection of the hollow bodies with a mantle can be realized by adhering using an adherence, sintering, soldering or welding.

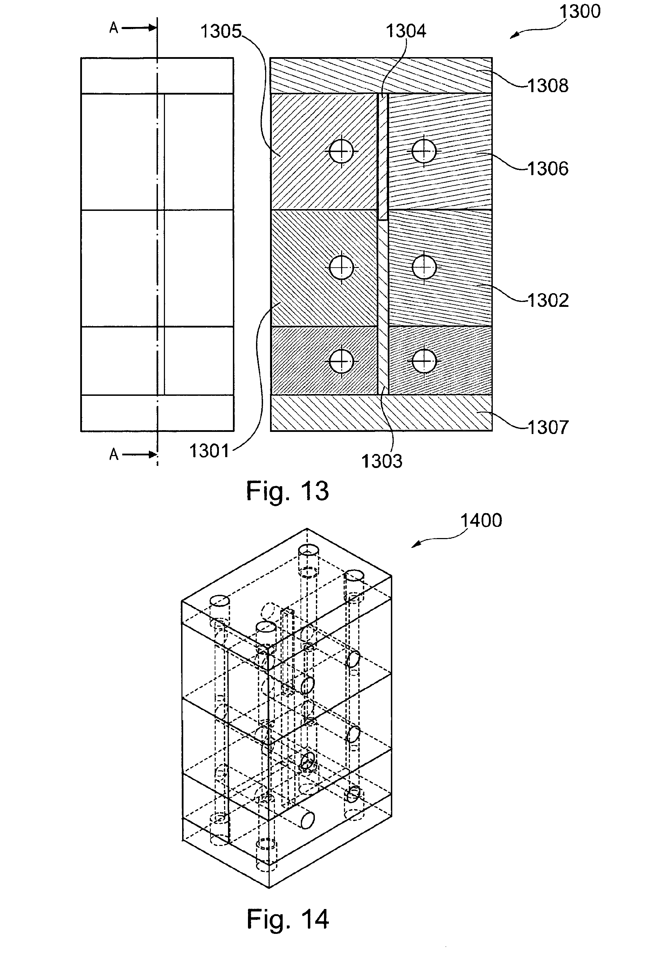

The manufacture of the prismatic cells may be performed in a powder metallurgic way using an appropriate device. In this context, the device 1300 shown in **Fig. 13** can be employed.

Components 1301, 1302, 1303, 1304 may form or enclose a hollow space or volume as shown in Fig. 13, which hollow space corresponds to a geometry of a prismatic cell to be manufactured. Component 1303 can be removed for filling the hollow space of the cell with metallic and/or ceramic powder or any other primary material, whereas components 1305 and 1306 can be shifted to an interior position closing the hollow space to an open side. During and/or after the filling, the device component 1304 may be forced to oscillate in order to promote a sufficiently dense filling with powder.

Component 1303 of the device 1300 closes the latter after the oscillating-based pre-compression, and the device 1300 can be closed at an upper and lower portion with a suitable cap 1307, 1308 (or cover or lid).

After that, component 1304 starts to compress by a motion via the cell wall from an interior to an exterior in order to prevent any porosity and in order to obtain a pre-compressed (and therefore rigid) green body for the sinter procedure. The bottom of the cell may be post-pressed by component 1303.

The pre-compression and the subsequent pressing allows green bodies (i.e. pre-compressed powder structures) to be manufactured which have a significantly lower shrinking during a subsequent sinter procedure. Furthermore, by taking this measure, a porosity of the cell wall can be prevented and the cell can be prevented from being contaminated by other materials during the manufacture procedure.

**Fig. 14** shows an isometric view 1400 of the device shown in Fig. 13.

After pressing, the green body is removed from the device 1300 and is subsequently post-processed for construction of the entire structure or the structural member. It is possible that it is sintered as a cell, wherein after that the assembly of the entire structure may be performed by connection technologies such as adhering, soldering or welding.

The construction of the entire component may be performed manually using appropriately designed devices and/or using robots in a partial or full-automated manner.

By properly designing the member 1303 of the device 1300 as a hollow body, it is possible to manufacture the cells also by casting or die casting.

It should be noted that the term "comprising" does not exclude other elements or features and the "a" or "an" does not exclude a plurality. Also elements described in association with different embodiments may be combined.
It should also be noted that reference signs in the claims shall not be construed as limiting the scope of the claims.

## Claims

1. A structural member for lightweight construction, the structural member comprising
a plurality of anisotropically designed hollow bodies;
wherein the plurality of anisotropically designed hollow bodies are arranged to abut to one another along all three spatial directions;
wherein adjacent ones of the plurality of anisotropically designed hollow bodies are fixed to one another.

2. The structural member according to claim 1, wherein the plurality of anisotropically designed hollow bodies are arranged to abut to one another along three different spatial directions.

3. The structural member according to claim 1 or any one of the above claims, wherein the plurality of anisotropically designed hollow bodies are arranged to form a periodic structure or a symmetric structure along one, two or all three of the spatial directions.

4. The structural member according to claim 1 or any one of the above claims, wherein the plurality of anisotropically designed hollow bodies are arranged to form an aperiodic structure or an asymmetric structure along one, two or all three of the spatial directions.

5. The structural member according to claim 1 or any one of the above claims, wherein the plurality of anisotropically designed hollow bodies are arranged to have anisotropic mechanical properties in different ones of the three spatial directions.

6. The structural member according to claim 1 or any one of the above claims, wherein the plurality of anisotropically designed hollow bodies comprise at least one of the group consisting of a metallic material, steel, aluminium, titan, magnesium, a ceramic material, and a plastic material.

7. The structural member according to claim 1 or any one of the above claims, further comprising a plurality of isotropically designed hollow bodies, wherein adjacent ones of the plurality of anisotropically designed hollow bodies and of the plurality of isotropically designed hollow bodies are fixed to one another.

8. The structural member according to claim 1 or any one of the above claims, wherein the plurality of anisotropically designed hollow bodies are arranged to abut to one another to form an ordered structure having defined physical properties along all three spatial directions.

9. The structural member according to claim 8, wherein the defined physical properties comprise at least one of the group consisting of mechanical properties, geometric dimensions, surface properties, and texture.

10. The structural member according to claim 1 or any one of the above claims, wherein the plurality of anisotropically designed hollow bodies are identical basic building blocks of the structural member.

11. The structural member according to claim 1 or any one of the above claims, wherein dimensions of the plurality of anisotropically designed hollow bodies differ among at least two of the three spatial directions.

12. The structural member according to claim 1 or any one of the above claims, wherein the plurality of anisotropically designed hollow bodies are arranged so that a packing density of different portions of the structural member differs.

13. The structural member according to claim 1 or any one of the above claims, wherein the plurality of anisotropically designed hollow bodies are arranged to define at least one preferential direction.

14. The structural member according to claim 1 or any one of the above claims, wherein a wall thickness of different portions of each of the plurality of anisotropically designed hollow bodies and/or a wall thickness of different ones of the plurality of anisotropically designed hollow bodies is identical.

15. The structural member according to claim 1 or any one of the above claims, wherein a wall thickness of different portions of each of the plurality of anisotropically designed hollow bodies and/or a wall thickness of different ones of the plurality of anisotropically designed hollow bodies differs.

16. The structural member according to claim 1 or any one of the above claims, wherein a part of the anisotropically designed hollow bodies mutually define at least a part of an outer boundary of the structural member.

17. The structural member according to claim 1 or any one of the above claims, wherein adjacent ones of the plurality of anisotropically designed hollow bodies are fixed to one another by one of the group consisting of sintering, adhering, welding, soldering, screwing, pressing, riveting, and a combination thereof.

18. The structural member according to claim 1 or any one of the above claims, wherein at least a part of the plurality of anisotropically designed hollow bodies comprises at least one of the group consisting of hollow ellipsoids, hollow cuboids, hollow rectangular parallel epipeds, hollow cylinders, and hollow prisms.

19. The structural member according to claim 1 or any one of the above claims, wherein at least a part of the plurality of anisotropically designed hollow bodies have at least one open surface portion exposing a hollow interior of the hollow body.

20. The structural member according to claim 1 or any one of the above claims, wherein at least a part of the plurality of anisotropically designed hollow bodies have an entirely closed surface enclosing a hollow interior of the hollow body.

21. The structural member according to claim 1 or any one of the above claims, wherein the plurality of anisotropically designed hollow bodies are arranged in a manner to mutually form a smooth boundary at a surface of the structural member.

22. The structural member according to claim 1 or any one of the above claims, wherein the plurality of anisotropically designed hollow bodies are arranged in a manner to mutually form a curved boundary at a surface of the structural member.

23. The structural member according to claim 1 or any one of the above claims, wherein each of the plurality of anisotropically designed hollow bodies has a dimension in each of the three spatial directions between 0.5 mm and 30 mm, particularly between 2 mm and 20 mm, more particularly between 3 mm and 11 mm.

24. The structural member according to claim 1 or any one of the above claims, configured as one of the group consisting of a crash absorber, a bumper, a side-collision protection, a structural member for an aircraft, a structural member for a spacecraft, a stringer, a structural member for a vehicle, a sports equipment, a ski stick, a club, a racket, a baseball bat, a golf club, a tennis racket, a racing car, a squash racket, a machine part, a plant engineering member, a structural member for robotics, an implant, a structural member for a medical device, a framework for a bicycle, and a structural member for a jet engine.

25. A method of manufacturing a structural member for lightweight construction, the method comprising
arranging a plurality of anisotropically designed hollow bodies to abut to one another along all three spatial directions;
fixing adjacent ones of the plurality of anisotropically designed hollow bodies to one another.

## Amended claims

### Amended claims in accordance with Rule 137(2) EPC.

**1.** A structural member for lightweight construction, the structural member comprising
a plurality of anisotropically designed hollow bodies;
wherein the plurality of anisotropically designed hollow bodies are arranged to abut to one another along all three spatial directions;
wherein adjacent ones of the plurality of anisotropically designed hollow bodies are fixed to one another;
wherein the plurality of anisotropically designed hollow bodies are arranged to abut to one another to form an ordered structure having defined physical properties along all three spatial directions.

**2.** The structural member according to claim 1,
wherein the plurality of anisotropically designed hollow bodies are arranged to form a periodic structure or a symmetric structure along one, two or all three of the spatial directions.

**3.** The structural member according to claim 1 or 2, wherein the plurality of anisotropically designed hollow bodies are arranged to form an aperiodic structure or an asymmetric structure along one, two or all three of the spatial directions.

**4.** The structural member according to claim 1 or any one of the above claims,
wherein the plurality of anisotropically designed hollow bodies are arranged to have anisotropic mechanical properties in different ones of the three spatial directions.

**5.** The structural member according to claim 1 or any one of the above claims,
wherein the plurality of anisotropically designed hollow bodies comprise at least one of the group consisting of a metallic material, steel, aluminium, titan, magnesium, a ceramic material, and a plastic material.

**6.** The structural member according to claim 1 or any one of the above claims, further comprising
a plurality of isotropically designed hollow bodies, wherein adjacent ones of the plurality of anisotropically designed hollow bodies and of the plurality of isotropically designed hollow bodies are fixed to one another.

**7.** The structural member according to claim 1 or any one of the above claims,
wherein the defined physical properties comprise at least one of the group consisting of mechanical properties, geometric dimensions, surface properties, and texture.

**8.** The structural member according to claim 1 or any one of the above claims,
wherein the plurality of anisotropically designed hollow bodies are identical basic building blocks of the structural member.

**9.** The structural member according to claim 1 or any one of the above claims,
wherein dimensions of the plurality of anisotropically designed hollow bodies differ among at least two of the three spatial directions.

**10.** The structural member according to claim 1 or any one of the above claims,
wherein the plurality of anisotropically designed hollow bodies are arranged so that a packing density of different portions of the structural member differs.

**11.** The structural member according to claim 1 or any one of the above claims,
wherein the plurality of anisotropically designed hollow bodies are arranged to define at least one preferential direction.

**12.** The structural member according to claim 1 or any one of the above claims,
wherein a wall thickness of different portions of each of the plurality of anisotropically designed hollow bodies and/or a wall thickness of different ones of the plurality of anisotropically designed hollow bodies is identical.

**13.** The structural member according to claim 1 or any one of the above claims,
wherein a wall thickness of different portions of each of the plurality of anisotropically designed hollow bodies and/or a wall thickness of different ones of the plurality of anisotropically designed hollow bodies differs.

**14.** The structural member according to claim 1 or any one of the above claims,
wherein a part of the anisotropically designed hollow bodies mutually define at least a part of an outer boundary of the structural member.

**15.** The structural member according to claim 1 or any one of the above claims,
wherein adjacent ones of the plurality of anisotropically designed hollow bodies are fixed to one another by one of the group consisting of sintering, adhering, welding, soldering, screwing, pressing, riveting, and a combination thereof.

**16.** The structural member according to claim 1 or any one of the above claims,
wherein at least a part of the plurality of anisotropically designed hollow bodies comprises at least one of the group consisting of hollow ellipsoids, hollow cuboids, hollow rectangular parallel epipeds, hollow cylinders, and hollow prisms.

**17.** The structural member according to claim 1 or any one of the above claims,
wherein at least a part of the plurality of anisotropically designed hollow bodies have at least one open surface portion exposing a hollow interior of the hollow body.

**18.** The structural member according to claim 1 or any one of the above claims,
wherein at least a part of the plurality of anisotropically designed hollow bodies have an entirely closed surface enclosing a hollow interior of the hollow body.

**19.** The structural member according to claim 1 or any one of the above claims,
wherein the plurality of anisotropically designed hollow bodies are arranged in a manner to mutually form a smooth boundary at a surface of the structural member.

**20.** The structural member according to claim 1 or any one of the above claims,
wherein the plurality of anisotropically designed hollow bodies are arranged in a manner to mutually form a curved boundary at a surface of the structural member.

**21.** The structural member according to claim 1 or any one of the above claims,
wherein each of the plurality of anisotropically designed hollow bodies has a dimension in each of the three spatial directions between 0.5 mm and 30 mm, particularly between 2 mm and 20 mm, more particularly between 3 mm and 11 mm.

**22.** The structural member according to claim 1 or any one of the above claims, configured as one of the group consisting of a crash absorber, a bumper, a side-collision protection, a structural member for an aircraft, a structural member for a spacecraft, a stringer, a structural member for a vehicle, a sports equipment, a ski stick, a club, a racket, a baseball bat, a golf club, a tennis racket, a racing car, a squash racket, a machine part, a plant engineering member, a structural member for robotics, an implant, a structural member for a medical device, a framework for a bicycle, and a structural member for a jet engine.

**23.** A method of manufacturing a structural member for lightweight construction, the method comprising
arranging a plurality of anisotropically designed hollow bodies to abut to one another along all three spatial directions;
fixing adjacent ones of the plurality of anisotropically designed hollow bodies to one another;
wherein the plurality of anisotropically designed hollow bodies are arranged to abut to one another to form an ordered structure having defined physical properties along all three spatial directions.
